**Europäisches Patentamt**

**European Patent Office**

**Office européen des brevets**

(11) Veröffentlichungsnummer: **0 306 742**

**A2**

## (12) EUROPÄISCHE PATENTANMELDUNG

(21) Anmeldenummer: **88113425.8**

(22) Anmeldetag: **18.08.88**

(51) Int. Cl.⁴: **D06H 3/08**

(30) Priorität: **05.09.87 DE 3729804**

(43) Veröffentlichungstag der Anmeldung:
**15.03.89 Patentblatt 89/11**

(84) Benannte Vertragsstaaten:
**AT BE CH DE ES FR GB GR IT LI NL**

(71) Anmelder: **Johannes Menschner
Maschinenfabrik GmbH & Co KG
Kampweg 40
D-4060 Viersen 11(DE)**

(72) Erfinder: **Hentschel, Wolfgang, Dipl.-Ing.
Edinger Strasse 21
D-6900 Heidelberg(DE)**
Erfinder: **Müller, Michael, Dipl.-Ing.
Fröhlichstrasse 46
D-6800 Mannheim(DE)**

(74) Vertreter: **Sonnet, Bernd, Dipl.-Ing. et al
Patentanwälte Dipl.-Ing. Harald Ostriga
Dipl.-Ing. Bernd Sonnet Stresemannstrasse
6-8 Postfach 20 13 27
D-5600 Wuppertal 2(DE)**

(54) **Verfahren zur automatischen Erkennung von Fehlern in bewegten Warenbahnen.**

(57) Dargestellt und beschrieben ist ein Verfahren zur automatischen Erkennung von Fehlern in bewegten Warenbahnen, insbesondere Geweben, unter Verwendung einer Lichtquelle und eines optoelektronischen Sensors, mit dem der von der Warenbahn durchgelassene oder reflektierte Lichtstrom aufgenommen und die ermittelten Leuchtstärkewerte zur Auswertung an eine Auswerteelektronik weitergegeben werden. Das bisher bestehende Problem, strukturierte Flächengebilde bei hohen Warenbahngeschwindigkeiten kontinuierlich mit großer Genauigkeit nach Fehlern abzutasten, wird prinzipiell dadurch gelöst, daß man eine in einer Linie entlang zu erwartender Fehlerereignisse sowie im wesentlichen quer zur Warenbahnlaufrichtung orientierte Warenbahnzeile mittels einer Vielzahl von Sensorelementen abtastet, die zugeordnete Flächenelemente der Warenbahn im wesentlichen unabhängig voneinander sowie gleichzeitig erfassen und den Grauwerten der Flächenelemente entsprechende Signale bilden, daß der Abbildungsmaßstab jedes Sensorelements so gewählt ist, daß jeweils mehrere gleichartige Strukturelemente der Warenbahn erfaßt werden und daß die Signale der einzelnen Sensorelemente zum Spaltenvergleich mit weiteren erfaßten Zeilen zwischengespeichert werden, daß die Signale längerfristig anhaltender Abweichungen im Grauwert, ggf. nach Verstärkung in einer Filterschaltung, mit Referenzwerten verglichen werden, die anhand der Werte einer als fehlerfrei geltenden Warenprobe vor der Messung festgelegt wurden.

## Verfahren zur automatischen Erkennung von Fehlern in bewegten Warenbahnen

Die Erfindung bezieht sich auf ein Verfahren zur automatischen Erkennung von Fehlern in bewegten Warenbahnen, insbesondere Geweben und anderen insbesondere strukturierten Flächengebilden, unter Verwendung einer Lichtquelle und eines optoelektronischen Sensors, mit dem der von der Warenbahn durchgelassene oder reflektierte Lichtstrom aufgenommen und die ermittelten Leuchtstärkewerte zur Auswertung an eine Auswerteelektronik weitergegeben werden.

Das Erkennen von Fehlern in bewegten, insbesondere Textilbahnen, ist außerordentlich wichtig, da fehlerhafte Warenbahnabschnitte nicht verarbeitet werden dürfen.

In der Textilindustrie wird die Warenschau zur Qualitätskontrolle von Textilien durchgeführt. Dabei wird das zu untersuchende Textil über einen beleuchteten Schautisch transportiert und von einem Kontrolleur optisch überwacht. Stellt er einen Fehler in der Ware fest, so wird nach Anhalten der Maschine die Textilstelle markiert. Anhand dieser Markierungen kann beim Weiterverarbeiten der Ware eine optimale Ausnutzung der Textilbahn erfolgen. Diese Tätigkeit erfordert eine außerordentliche Konzentration des Bedieners und ist daher sehr ermüdend. Aus diesem Grund werden auch nur ca. 80% aller Fehler erkannt. Durch das Anhalten der Stoffbahn zum Markieren können auch keine großen Textilbahn-Geschwindigkeiten erzielt werden.

Diese Problematik ist seit langem bekannt, und an Versuchen, das Fehlererkennungsverfahren automatisch durchzuführen, hat es im Stand der Technik nicht gemangelt. Gleichwohl ist festzustellen, daß keine einzige Maschine oder Vorrichtung auf dem Markt erhältlich ist, die ein Verfahren zur automatischen Erkennung von Fehlern sinnvoll und vor allem auch zu erschwinglichen Kosten auszuführen im Stande wäre.

Druckschriftlich bekannte Verfahren zur automatischen Erkennung von Fehlern in bewegten Warenbahnen nach dem Oberbegriff des Patentanspruches 1 bedienen sich zum Beispiel kostspieliger Laser (DE-PS 27 07 544) und/oder sehr aufwendiger optischer Systeme (z.B. DE-OS 28 43 653 oder DE-PS 29 25 734). Die DE-PS 33 04 817 schlägt ein Verfahren vor, bei dem eine zeilenweise quer über die Warenbahn geführte Abtast-Optik (Scanner) verwendet wird, die den momentanen Ausschnitt aus der Warenbahn auf eine Filtermaske abbildet. Die hier entstehenden Leuchtstärkewerte werden über eine Integrationsoptik mittels eines photoelektrischen Wandlers in elektrische Signale umgeformt, die ein Grauwertbild eines größeren Gewebefehlers erzeugen. Diese Art zeilenweiser Abtastung mit einer bezüglich der Warenbahn hin- und herbewegten Scanner-Optik ist im grundsätzlichen Aufbau und vor allem in der Steuerung aufwendig und kompliziert.

Hier setzt die Erfindung ein. Hier liegt die Aufgabe zugrunde, ein vergleichsweise einfach auszuführendes Verfahren zur automatischen Erkennung von Fehlern in bewegten Warenbahnen, insbesondere Geweben und anderen insbesondere strukturierten Flächengebilden vorzuschlagen, mit dem es auch bei hohen Warenbahngeschwindigkeiten möglich ist, diese kontinuierlich sowie mit hoher Genauigkeit nach Fehlern abzutasten.

Die Erfindung geht von folgenden Überlegungen aus:

Bei textilen Flächengebilden, insbesondere Geweben, treten Einzelfehler, Mehrfachfehler und Farbfehler auf. Einzelfehler bestehen aus einzelnen fehlenden oder doppelten Schuß- und/oder Kettfäden. Bei Mehrfachfehlern handelt es sich meist um ausgedehnte Löcher oder Verdickungen im Material, und Farbfehler sind durch längerfristig bzw. über einen größeren Bereich auftretende Materialverfärbungen gekennzeichnet. Im Prinzip lassen sich alle auftretenden Fehler als ein von einer normal strukturierten Warenbahn abweichendes Ereignis definieren, welches sich über einen gewissen Bereich der Breite und/oder Länge der Stoffbahn erstreckt.

Das erfindungsgemäße Verfahren, solche Fehler aufzuspüren, ist nun dadurch gekennzeichnet, daß man eine in einer Linie entlang zu erwartender Fehlerereignisse sowie im wesentlichen quer zur Warenbahnlaufrichtung orientierte Waranbahnzeile mittels einer Vielzahl von Sensorelementen ab tastet, die zugeordnete Flächenelemente der Warenbahn im wesentlichen unabhängig voneinander sowie gleichzeitig erfassen und den Grauwerten der Flächenelementen entsprechende Signale bilden, daß der Abbildungsmaßstab jedes Sensorelementes so gewählt ist, daß jeweils mehrere gleichartige Strukturelemente der Warenbahn erfaßt werden, daß die Signale der einzelnen Sensorelemente zum Spaltenvergleich mit weiteren erfaßten Zeilen zwischengespeichert werden und daß die Signale längerfristig anhaltender Abweichungen im Grauwert, ggf. nach Verstärkung in einer Filterschaltung, mit Referenzwerten verglichen werden, die anhand der Werte einer als fehlerfrei geltenden Warenprobe vor der Messung festgelegt wurden.

Als Sensor verwendet man vorzugsweise einen CCD ("charge-coupled devices")-Zeilensensor, der als solcher bekannt ist. Weitere vorteilhafte Ausgestaltungen des erfindungsgemäßen Verfahrens sind in den übrigen Ansprüchen angegeben.

Das Verfahren läßt sich praktisch im wesentlichen wie folgt ausführen:

Die zu untersuchende Warenbahn wird über einen beleuchteten Spalt geführt. Der das Material durchdringende Lichtstrom wird bereichsweise von den einzelnen Sensorelementen als Grauwert erfaßt. Jedes Sensorelement "betrachtet" ein kleines Flächenelement ("Fenster") der Warenbahn, wobei die Vielzahl solcher Fenster vornehmlich in Richtung der Schußfäden orientiert ist. In der Regel verlaufen die Schußfäden lotrecht zur Waren bahnlaufrichtung. In jedem Fenster befindet sich, abhängig vom Material, eine Mehrzahl von Strukturelementen, also insbesondere Fäden. Die Fenstergröße ist so gewählt, daß die einzelnen Strukturelemente als solche nicht mehr erkennbar sind, daß aber das Fehlen eines Strukturelements (z.B. Faden) dennoch zu einer deutlichen Änderung des Grauwerts führt. Eine für die Praxis außerordentlich befriedigende Auflösung ergibt sich bei einer z.B. 2,40 m breiten Textilbahn und einem Zeilensensor mit 2000 lichtempfindlichen Sensorelementen zu 1,2 $mm^2$. Hieraus wird deutlich, daß sehr feine Warenqualitäten auf Fehler untersucht werden können. Nun wird aber, und das ist eine wesentliche Eigenschaft des erfindungsgemäßen Verfahrens, eine in nur einem solchen kleinen Fenster erfaßte Unregelmäßigkeit noch nicht als Fehler klassifiziert. Denn es ist durchaus denkbar, daß allein aufgrund statistischer Schwankungen in einer intakten Warenbahn in einem Fenster beispielsweise ein Kettfaden fehlt, der dann aber im Nachbarfenster als zusätzlicher Faden erscheint. Das Verfahren wertet hingegen nur längerfristig anhaltende Abweichungen im Grauwert, also Grauwertänderungen über einen gewissen Zeilen- und Spaltenbereich hinweg aus. Denn wenn beispielsweise ein Schußfaden tatsächlich fehlt, so fehlt er in einer Vielzahl aufeinanderfolgender Fenster bzw. Flächenelemente.

Dadurch, daß die Warenbahn sowohl der Breite als auch der Länge nach in einzelnen, voneinander unterscheidbaren Fenstern betrachtet wird, lassen sich auf prinzipiell einfache Weise den einzelnen Fenstern Koordinaten zuordnen, die eine spätere Fehlerauswertung erlauben, etwa mit der Aussage "Fehler 'Grauwertunterschreitung' in Warenbahnzeile X von Spalte $Y_n$ bis $Y_m$". Eine derartige Fehlerfeststellung würde auf einen fehlenden oder gerissenen Schußfaden hinweisen.

Bei der eingangs als beispielhaft genannten Auflösung der Größenordnung von 1,2 $mm^2$, einer angestrebten maximalen Warenbahngeschwindigkeit von 120m/s. sowie einer aus 2000 Sensorelementen bestehenden Sensoroptik, also etwa eines CCD-Zeilensensors mit 2000 Pixeln, sind Grauwerte der einzelnen Elemente innerhalb von 250ns zu verarbeiten, wenn die Stoffbahnkontrolle in Echtzeit erfolgt. Um diese Datenmenge mit vertretbarem Aufwand in der Hardware bewältigen zu können, werden die fortlaufend anfallenden Signale nach mathematischen Algorithmen in kaskadierbaren ALU-Schaltungen ("arithmetic logic unit") verarbeitet.

Da die heute verfügbaren CCD-Zeilensensoren in ihren Pixeln verhältnismäßig große Streuungen aufweisen, wird jeder einzelne Pixel-Grauwert mit einem Referenzwert verglichen. Das z.B. aus einer Differenzlogik gewonnene Ergebnis dieses Vergleichs enthält dann nur noch die Informationen über die Abweichung des Grauwertes vom Sollzustand.

Durch die in der Filterschaltung fortlaufend gebildeten Mittelwerte, insbesondere gleitenden Mittelwerte, werden die statistischen Schwan kungen unterdrückt und die längerfristig auftretenden Abweichungen in den einzelnen Grauwerten verstärkt. Da Fehler sowohl quer zur Warenbahn (Schußfäden) als auch in Warenbahnlaufrichtung (Kettfäden) auftreten können, erfolgt die Mittelwertbildung in beiden signifikanten Richtungen der zu erwartenden Fehler.

Die Erfindung wird nachfolgend unter Bezugnahme auf die Zeichnungen im einzelnen erläutert, die das Verfahren schematisch anhand von Blockschaltbildern erläutern.

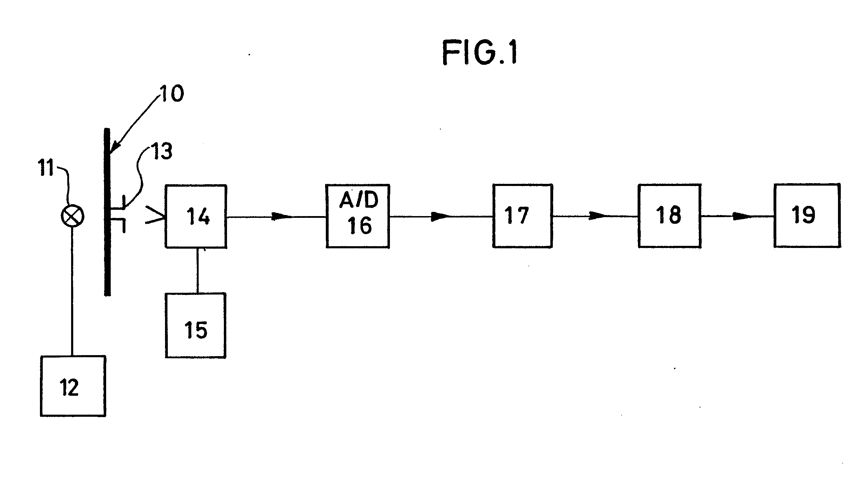

In Fig. 1 ist mit 10 die abzutastende Warenbahn bezeichnet. Diese wird von einer Lichtquelle 11 durchleuchtet, der eine Lichtregulierung 12 zugeordnet ist.

Auf der anderen Seite der Warenbahn 10 kann eine Schlitzblende 13 zur exakten Begrenzung der Durchlichtzone und zur Ausfilterung von Fehl- und Fremdlicht vorgesehen sein. Das die Warenbahn durchdringende Licht wird von einem Sensor 14 erfaßt. Sowohl die Lichtquelle 11 als auch der Sensor 14 erstrecken sich quer über die Breite der Warenbahn. Im nachfolgenden sei angenommen, daß es sich bei dem Sensor 14 um einen CCD-Zeilensensor handelt. Er erfaßt mit seiner Vielzahl von Pixeln die Warenbahn 10 in einer ebensolchen Vielzahl von kleinen "Fenstern". Mit 15 ist eine Sensorsteuerung bezeichnet.

Die Lichtsteuerung 12 hat insbesondere die Aufgabe, die Lichtquelle 11, insbesondere eine Röhrenlampe, in ihrer Helligkeit zu regulieren, da die benötigte Helligkeit abhängig ist von der Lichtdurchlässigkeit des Gewebes. Außerdem soll die Lichtregulierung durch entsprechende Steuerung der Lichtquelle 11 verhindern, daß die vom Sensor 14 erfaßten Helligkeitswerte von der Warenlaufgeschwindigkeit und anderen Störfaktoren abhängig sein könnten. Im Idealfall sollte die Lichtquelle so eingestellt werden können, daß sich für die Sensorelemente des Sensors 14 Grauwerte im Mittel von 50% ergeben, so daß nach oben und unten hin die möglichen Schwankungsbreiten etwa gleich sind. Der Sensorsteuerung 15 fällt im wesentlichen die Aufgabe zu, den Sensor 14 zu takten, die Integrationsdauer der Pixel zu überwachen und die Meßwerte seriell auszutasten.

Die vom Sensor 14 bzw. von den einzelnen Pixeln des CCD-Zeilensensors erzeugten Signale werden einem A/D-Wandler 16 zugeführt, um die analogen Signale in digitalisierter Form weiter verarbeiten zu können.

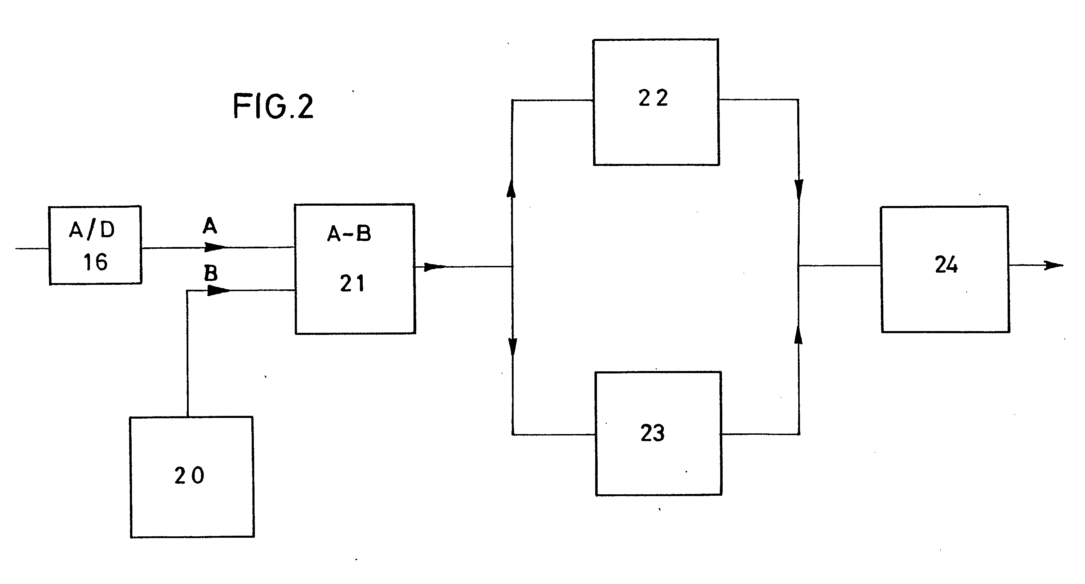

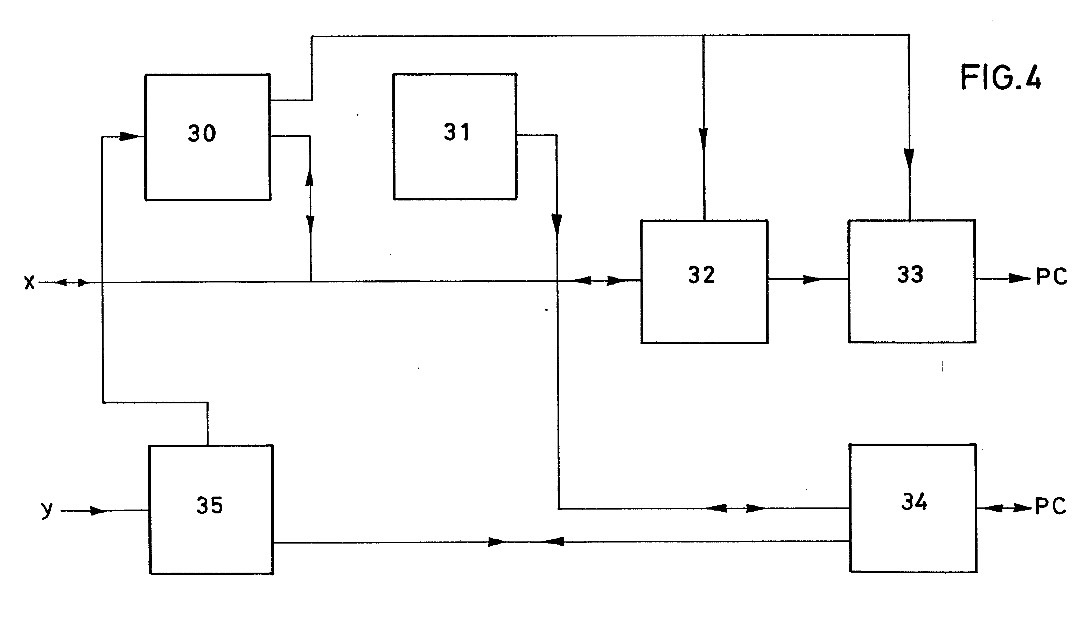

Die nächste Signalverarbeitungsstufe 17 stellt eine Störsignalunterdrückung dar, die im einzelnen anhand der Fig. 2 erläutert wird. Bei der darauffolgenden Stufe handelt es sich um eine Fehlererkennung und -parametrisierung 18, auf die in den Fig. 2 und 4 noch näher eingegangen wird. Mit 19 schließlich ist global die Fehlerauswertung bezeichnet, die Datensicherung, Positionsrückbestimmung und Fehlerausgabe (Protokollierung) umfaßt.

Die im Blockschaltbild nach Fig. 2 dargestellte Störsignalunterdrückung schließt an A/D-Wandler 16 an und umfaßt einen Referenzspeicher 20, eine Differenzlogik 21 eine horizontale Mittelwertbildung 22, eine vertikale Mittelwertbildung 23 sowie eine nachgeschaltete arithmetische Mittelwertbildung 24.

In dem Referenzspeicher 20 wird der Grauwert jedes Pixels des Zeilensensors 14 gespeichert. Dies kann etwa dadurch geschehen, daß man einen intakten Warenbahnabschnitt abtastet und die festgestellten Mittelwerte jedes Pixels im Referenzspeicher ablegt.

Die Differenzlogik 21 führt die erste mathematische Operation aus und ist Bestandteil einer kaskadierbaren ALU-Anordnung. Die Differenzlogik 21 vergleicht die vom A/D-Wandler 16 gelieferten Werte mit dem Referenzwert des Referenzspeichers 20 durch Subtraktion. Die so entstehende Differenz der Meßwerte wird durch gleitende Mittelwertbildung gefiltert. Dies geschieht nach dem Algorithmus

$$Mn = Ma + \frac{G - Ma}{n}$$

Dabei ist G die aktuelle Grauwertdifferenz, Ma der alte und Mn der neu berechnete Mittelwert der Abweichung. n ist die Anzahl der für die Mittelwertbildung herangezogenen Sensorelemente (Pixel) und beträgt vorzugsweise n = 8.

Da die Mittelwertbildung sowohl in horizontaler Abtastrichtung (Mittelwertbildung 22) wie auch vertikaler Richtung (Mittelwertbildung 23) erfolgt, müssen die jeweiligen Mittelwerte zwischengespeichert werden. Deshalb werden für den horizontalen Mittelwert eine Speicherzelle $M_{ha}$ und für den vertikalen Mittelwert ca. 2000 Speicherzellen $M_{va}(i)$ benötigt. Die Speicherzelle $M_{ha}$ enthält den Mittelwert der Zeile. Die Speicherzelle $M_{va}(i)$ enthält den Mittelwert des i-ten Pixels der Zeile.

Nach der obigen Formel wird zuerst jeweils die Differenz G-Ma gebildet und das Ergebnis durch n dividiert. Anschließend wird der Quotient mit Ma addiert. Die Ergebnisse beider parallel verarbeiteter Mittelwertbildungen werden nun über die arithmetische Mittelwertbildung 24 nach der Formel $MW_n(i) = (M_{hn}(i) + M_{vn}(i)) / 2$ zusammengesetzt.

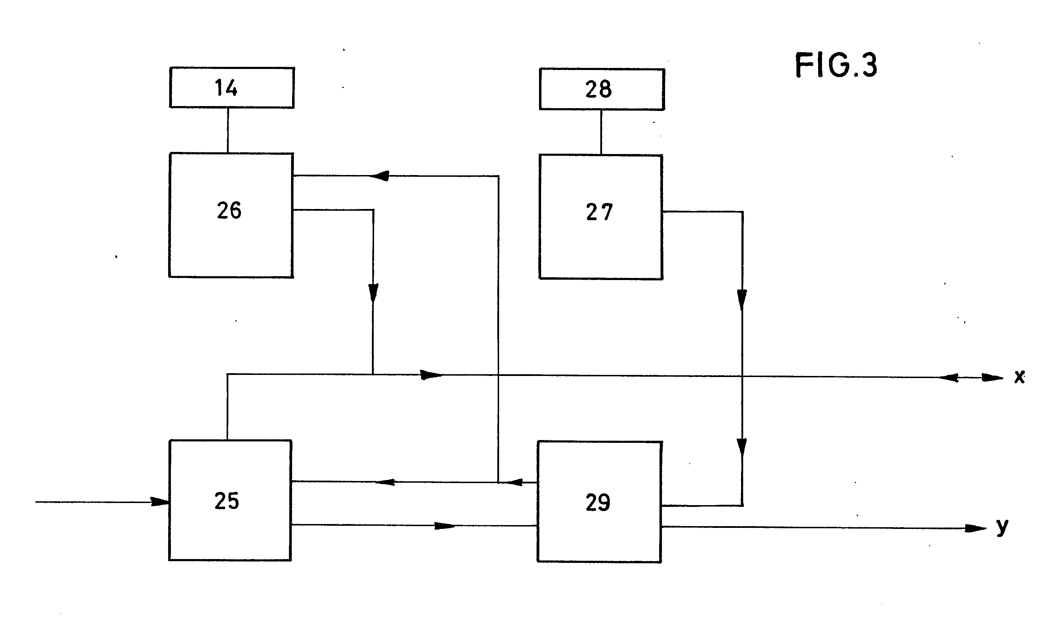

Diese Summe $MW_n(i)$ wird mit zwei Schwellwertdetektoren 25 (Fig. 3) auf Über- bzw. Unterschreiten der voreingestellten Toleranzgrenzen untersucht (Fehlererkennung). Ist die Abweichung größer als der obere Schwellwert, so ist die Textilbahn an dieser Stelle zu hell, was auf mindestens einen fehlenden Faden schließen läßt. Wird der untere Schwellwert unterschritten, so ist die Textilbahn an dieser Stelle zu dunkel, was auf mindestens einen zusätzlichen Faden schließen läßt.

Wie weiter anhand der Fig. 3 aufgezeigt wird, ist dem Sensor 14 ein Sensorelement-, insbesondere Pixelzähler 26 zugeordnet. Dieser ist zuständig für die Positionserkennung des Fehlers in Querrichtung der Warenbahn. Ein Zeilennummernzähler 27, der mit Werten eines Inkrementalgebers 28 gespeist wird, ordnet die festgestellten Fehler der Lauflänge der Warenbahn zu.

Mit 29 ist eine Verdichtungsstufe bezeichnet, bei der es sich - vereinfacht gesagt - um ein digitales retriggerbares Monoflop handelt. Diese Stufe dient dazu, die Summe der Fehlermeldungen auf ein notwendiges Minimum zu reduzieren, insbesondere die maximal in einer Zeile festgestellte Fehlerzahl zu begrenzen. Denn wenn in einer abgetasteten Warenbahnzeile beispielsweise 300 Fehler auftreten, brauchen nicht die Koordinaten dieser 300 Fehler später abgespeichert zu werden, sondern nur die Nummer der Zeile an sich, da ja dieser Bereich der Stoffbahn zu weiterer Verwendbarkeit ausfällt.

Fig. 4 zeigt weitere Datenverarbeitungsstufen und schließt bei x und y an das Blockschaltbild der Fig. 3 an. 30 ist ein Signalprozessor für die Fehleranalyse. Hier findet eine zweite Datenverdichtung statt, die in der Information Fehler 'ja', Fehlerart 'Fehlstelle, Überschußstelle' , Fehlerposition (X, Y) resultiert. Mit 31 ist ein Programmspeicher bezeichnet. Ein Wechselspeicher 32 dient als Fehlerzwischenspeicher. Eine DMA (direct memory access)-Schnittstelle 33 übernimmt den Datentransfer zu einem PC. Mit 34 ist schließlich ein Kommunikationsport und mit 35 die Interrupt-Synchronisation bezeichnet.

Im RAM des PC sind die Fehlerkenngrößen nach Art und Fehlerposition digital abgespeichert und können nach Beendigung der Warenschau ausgelesen sowie auf einen Bildschirm und/oder Printer ausgegeben werden.

**Ansprüche**

1. Verfahren zur automatischen Erkennung von Fehlern in bewegten Warenbahnen, insbesondere Geweben und anderen insbesondere strukturierten Flächengebilden, unter Verwendung einer Lichtquelle und eines optoelektronischen Sensors, mit dem der von der Warenbahn durchgelassene oder reflektierte Lichtstrom aufgenommen und die ermittelten Leuchtstärkewerte zur Auswertung an eine Auswerteelektronik weitergegeben werden, dadurch gekennzeichnet, daß man eine in einer Linie entlang zu erwartender Fehlerereignisse sowie im wesentlichen quer zur Warenbahnlaufrichtung orientierte Warenbahnzeile mittels einer Vielzahl von Sensorelementen abtastet, die zugeordnete Flächenelemente der Warenbahn im wesentlichen unabhängig voneinander sowie gleichzeitig erfassen und den Grauwerten der Flächenelemente entsprechende Signale bilden, daß der Abbildungsmaßstab jedes Sensorelements so gewählt ist, daß jeweils mehrere gleichartige Strukturelemente der Warenbahn erfaßt werden, daß die Signale der einzelnen Sensorelemente zum Spaltenvergleich mit weiteren erfaßten Zeilen zwischengespeichert werden, daß die Signale längerfristig anhaltender Abweichungen im Grauwert, ggf. nach Verstärkung in einer Filterschaltung mit Referenzwerten verglichen werden, die anhand der Werte einer als fehlerfrei geltenden Warenprobe vor der Messung festgelegt wurden.

2. Verfahren nach Anspruch 1, dadurch gekennzeichnet, daß in der Filterschaltung fortlaufend der gleitende Mittelwert sowohl über die Signale der Sensorelemente einer Zeile als auch über die Signale jedes einzelnen Sensorelements entlang einer Spalte gebildet werden.

3. Verfahren nach Anspruch 1 oder 2, dadurch gekennzeichnet, daß man als Sensor einen CCD-Zeilensensor verwendet.

4. Verfahren nach Anspruch 1 oder einem der folgenden, dadurch gekennzeichnet, daß. die Verarbeitung der Signale in Echtzeit erfolgt.

5. Verfahren nach Anspruch 1 oder einem der folgenden, dadurch gekennzeichnet, daß die fortlaufend anfallenden Signale nach mathematischen Algorithmen in kaskadierbaren ALU-Schaltungen verarbeitet werden.

6. Verfahren nach Anspruch 1 oder 2, dadurch gekennzeichnet, daß die fehleradäquaten Signale nach elektronischer Aufbereitung, insbesondere Digitalisierung, hinsichtlich Art der Fehler sowie hinsichtlich Ort ihres Auftretens nach Zeilen- und Spaltenbereich für protokollarische Auswertung im Anschluß an den Warenbahndurchlauf abgespeichert werden.

FIG.1

FIG.2

EP 0 306 742 A2

FIG.3

EP 0 306 742 A2

FIG.4

EP 0 306 742 A2